# EUROPEAN PATENT APPLICATION

(11) **EP 2 164 260 A1**
(43) Date of publication of application: **17.03.2010**
(21) Application number: 09179118.6
(22) Date of filing: 02.11.2004
(51) Int. Cl.: H04N 7/173

(54) **System and method to broadcast video with clear sound and picture using the internet**

(30) Priority: 05.11.2003 EG 20310021
(62) Divisional of application: 04798785.4
(71) Applicant: Al Amri, Moosa Eisa, Dubai (AE)
(72) Inventor: Al Amri, Moosa Eisa, Dubai (AE)
(74) Representative: Cronin, Brian Harold John

(57) **Abstract**

A system and method enable video contents to be selected by a user via the Internet (140) and distributed via a multichannel video broadcasting system, for the selected video content to be displayed at the user's location on a TV monitor (150) or on a PC (160) provided with a TV display card, immediately or with a delay in correspondence with a user command. The system comprises a main video server (200) storing selectable video contents (210,220,230); an authorization server (300) accessible via the Internet for a user to transmit user commands to select video contents that are to be displayed immediately or with a delay; a multichannel cable or satellite broadcasting apparatus (250;280,285); and a distribution server (350) that supplies selected video contents from the main video server (200) to the broadcasting apparatus (250;280,285), for them to be broadcast by the broadcasting apparatus. The system is arranged to provide an indication of a channel that is available to broadcast a selected video content immediately or with a delay in correspondence with a user command. This indication is available to the user via the authorization server (300) and the Internet (140). The broadcast of a selected video content on the indicated available channel is initiated immediately or with a delay in correspondence with the user command.

## Description

### Field of the Invention

The invention relates to a system to send a broadcast of a video channel or TV channel in a clear way, with a new system for operation, through an authorization server to a processing server to a main video server which has live video, recorded video, or video-on-demand ready for selection by a distribution server working through TV Broadcast and / or direct TV cable or through a receiver associated with a satellite, to be displayed in a TV monitor or on a PC with a card to receive TV channels.

### Background of the Invention

Watching various events live on TV or on the Internet has huge and immediate effects on the public. There are millions of programs on digital TV channels and Internet sites, and there is an increased demand for these live events to keep the interest of the public. Also, TV and Video commercials and other commercials that cover local events, have a huge effect on the public.

We noticed that video displayed through the Internet on a PC screen occasionally stops suddenly to reload, and pictures and sound obtained from the Internet are never clear. This encouraged us to find a solution for this problem in order to receive clear pictures and sound from the network on the TV. We noticed that most available solutions are costly, and the public mostly prefers low-cost solutions such as 56k byte (or may be higher) modems depending on the customer's desire.

High speed modems transfer the data at a high rate, and so save money and time, but generally the solution preferred by the public is the 56 k byte modem, for that reason we provide this invention.

### Prior Art

### 1- TV Cable

Cable operation companies currently (2003) reach about 70 million of the 110 million households in the U.S.A., and expect to have high bandwidth cable facilities upgraded to be available to over 90% of their cable customers by end of year 2003. Industry analysts projected that anywhere from 30% to 90% of all cable customers will become subscribers to interactive TV and online broadband services by 2003. Through their upgraded plant, cable-operating companies will change their analog TV signals to digital TV signals, and have the bandwidth capacity to offer around 500 channels of digital TV. However, this invention aims to offer a suitable solution to the public to reduce the cost for them.

### 2- Internet Lines

The 56k byte line is the standard line of the Internet, and is commonly used globally due to the low cost of its usage.

DSL internet lines have approximately 400,000 subscribers in the United Arab Emirates, and DSL lines are expected to grow from the current 10 million to over 40 million subscribers by 2003 in the USA.

Thousands of new digital TV and video production companies are expected to be formed to create programming for the hundreds of available new channels in the cable service areas and the millions of Internet sites that can be enabled with online video services, and all of them will need new video content.

The huge numbers of films of high quality only can found in cinemas and via TV cable companies. This invention aims to open a new way to transfer films or direct broadcast and / or video-on-demand, through the Internet, as this will have a high and immediate impact on the public. There are millions of contents on digital TV channels and on the Internet. There are increased demands on these sites to increase the interest of the viewers. Also there are video commercials and other commercials that cover local events.

### 3- Prior art in the field of networks, based on remote control

Any person can automatically remote control devices e.g. to switch on or off apparatus like a PC, a TV, a Video installation or any other device connected to the network through the Internet by a local computer network which allows the users to browse Internet sites, and enter data to the sites. Besides, the Internet can be used as remote control environment to open / close an electrical system, such as a PC, TV or video.

### 4- Prior art in the field of Satellites and Receivers

The use of satellites and receivers is well known. There are many satellites such as ArabSat and EuroSat that broadcast movies and TV and Radio programs, covering a wide area. The satellites receive the necessary content from the ground station, then resend to subscribers having a receiver with a chip that includes the subscriber code, and connected to a TV, or a PC with a TV or Video card. An example of a known satellite system is the AL THURAIA system of the United Arab Emirates, which covers an increasing number of countries.

### 5- Prior proposals in the patent literature relating to video distribution

US patent 6,564,380 discloses an Internet-based video feed management system which includes access to video, including video-on-demand files, that are downloaded by a customer and delivered through the customer's website and delivery network.

WO 99/63757 describes a system for the delivery of broadcast television via the Internet protocol.

US Patent 6,510,556 discloses a video distributing apparatus for distributing stored video to a viewer, which includes a schedule table for holding a distribution schedule of the stored video data. A controller controls the deferred distribution of the stored video data. The user fills a reservation request including a title of the video, a channel for distribution of the video data selected by the user, and a designated later time to start the distribution. This system is unsuitable for live video.

US Patent 6,557,030 discloses a method of generating a scheduling matrix for data-on-demand services.

US Patent 6,571,390 discloses a user interface for ordering video-on-demand.

This patent literature is useful for understanding the present invention, and the contents of these documents are incorporated herein by way of reference.

### Summary of the Invention

The invention relates in particular to a system to broadcast a video channel or TV channel selected through a main authorization server connected with the Internet to order the required program through the Internet. The Internet has various sites such as: News, Sports, Plays, Schools, business conferences, etc. Any party may ask to enter to the web through the main authorization server by entering its IP address and / or the code of the TV cable, digital cable or the code of a receiving decoder and / or receiver chip. The order is transferred to a processing server, transferred to a main video server of the TV or Video Station then to a distribution server which transfers the ordered subject through TV cable or digital cable or receiver through satellite, either to the user's PC having a TV card to watch the program, or to a TV monitor.

The invention aims to make available the millions of TV and movie films and Video films and programs produced live, recorded or on-demand, so these productions can be chosen on the Internet. The system of the invention can be operated and broadcast from existing satellite stations that can be used to broadcast the selected programs and content at the user's choice by means of commands sent via the web site, these stations sending the broadcast either via the satellites or by TV broadcast to be received by the user's receiver and / or decoder, as per a main aspect of the current invention.

The invention proposes a method and system to broadcast a video channel or TV channel with a clear sound and picture from a list via the Internet.

The present invention also aims to provide a system to broadcast a Video channel or TV channel selected through a main authorization server connected with the Internet. The order to select a video content via the Internet is transferred by means of a processing server. The processing server will control the transfer of the video content to the main video server of the TV or Video Station, which can include live commercials provided by various feeding sources in different locations of production companies, as an example. The main video server stores previously-recorded video and video provided by other sources, in addition to live feeding of video provided by site cameras to send these programs through TV cable, digital cable or receiver or through satellites. This is done by the main authorization server that is connected with the Internet to receive the user commands through the Internet from the entry party who accesses programs on the web site. This option is open to all subscribers on the net. On the web site there is ample information about the site, also there are various options such as: the option of live, previous recorded video, video-on-demand, or others. The user can enter control commands according to his desire, through the main authorization server, to the main video server. The authorization server contains the list of video sources available on the web site and connected to the IP address to the home site of the network. A subscriber entering this site to access the video distribution device will be required to subscribe to an agreement to enter the required site. Usually, the user will enter a code or password associated with the TV cable, digital, or the chip of receiver and / or decoder in his possession. This enables the user to receive the broadcast through satellites and the authorization server as mentioned before, by commands transferred to the processing server, then to the main video device, then to a distribution server which connects for example with a cable, in particular a digital TV cable, and a receiver, to be connected finally with the user's TV monitor or personal computer PC having a TV card to display programs on the PC screen. The receiver being connected by cable to the TV monitor, the program will be seen with a very high-resolution picture and clear sound. In this way the invention overcomes the disadvantages in transferring the sound and pictures of any video program directly from the Internet, and with less cost, especially at the peak time on the Internet, when the use of Internet lines increases. This reduces the speed of communicating within the Internet, and accordingly affects the quality. Besides, the video content has to be downloaded on the computer, which takes time, and sometimes due to technical problems, the computer comes down. The present invention avoids these aforementioned disadvantages.

It is possible also to make a computer price table to computerize charges of the entry party to any program of the main center of the movies, whether the event was direct, recorded video or video-on-demand. Charging can be made by subscribing to the system or by using smart cards.

### Main aspects of the invention

In one main aspect, the invention provides a system for enabling video content to be selected by a user via the Internet and for distributing selected video content via a multichannel video broadcasting system, for the selected video content to be received on a multichannel receiver and displayed at the user's location on a TV monitor or on a PC provided with a TV display card. This system comprises: a main video server storing a plurality of selectable video contents; an authorization server accessible via the Internet for a user to transmit user commands to select video contents that are to be displayed immediately or with a delay; a multichannel video broadcasting apparatus; and a distribution server for supplying, from the main video server to the broadcasting apparatus, selected video contents to be broadcast on channels of the broadcasting apparatus.

The system according to the invention is arranged on the one hand to provide an indication of a channel (i.e. at least one channel) that is available to broadcast a selected video content immediately or with a delay in correspondence with a user command, said indication being available to the user via the authorization server and via the Internet so he can tune his TV (or PC with TV card) to receive an indicated channel. On the other hand, the system is arranged to initiate the broadcast of a selected video content on the indicated available channel immediately or with a delay in correspondence with said user command, i.e. once the user has validated the order.

In another main aspect, the invention provides a method for enabling a user to select a video content via the Internet and for distributing selected video content via a multichannel video broadcasting system for the selected video content to be received on a multichannel receiver and displayed at the user's location on a TV monitor or on a PC provided with a TV display card. The method according to the invention comprises the following steps: selecting, from a plurality of selectable video contents that are stored on a main video server, video contents that are to be displayed immediately or with a delay, in response to user commands transmitted via the Internet; supplying selected video contents from the main video server to a multichannel video broadcasting apparatus, for the selected video content to be broadcast on an available channel of the broadcasting apparatus; providing an indication of a (or more than one) channel that is available to broadcast a selected video content immediately or with a delay in correspondence with a user command, said indication being available to the user via the authorization server and via the Internet, so the user can tune his TV or PC with TV card to receive the indicated channel; and initiating the broadcast of a selected video content on the indicated channel immediately or with a delay in correspondence with said user command, i.e. once the user has validated the order.

The system and method according to these aspects of the invention achieves the previously-discussed clear reception of the selected video contents (which are transmitted not by the Internet, but are transmitted preferably as digital signals by cable or large-bandwidth satellite broadcast of large-bandwith, offering many hundreds of available digital TV channels), in combination with the advantage that the user can simply select any video content and control its practically-instantaneous transmission and display, or a delayed transmission if desired.

As explained below, the system and method of the invention allow great flexibility and convenience for the user in ordering different types of video contents immediately or at a later time. Moreover, processing of the orders is problem-free for the service providers and existing equipment can be used to implement the invention.

Further features and aspects of the invention are set out in the appended claims and in the following general description and the later detailed description.

### General description of the Invention

The invention relates generally to a method and system to broadcast a TV channel or Video channel on a TV monitor or on a PC using a main authorization server connected with the Internet, by sending user commands through the Internet to receive the required subject or program to end, through a TV cable or digital TV system, on a TV monitor or on a PC having a TV-reception card. The system and method recall the required video content for the PC with a TV card through a main authorization server connected with the Internet. The end result of the new system is an excellent final sound and picture with no need to download or reload. The required video can be displayed on the PC with a TV card. The user can open the computer with a TV card, browse the web site on the Internet, choose the required video by clicking on the corresponding option, and the user command is delivered via the authorization server connected with the Internet to select the required video and send it to the processing server, which transfers it to the main video server which stores live broadcasts, recorded videos and video-on-demand that can be recalled through the IP address. Then the video broadcasting apparatus of the TV or Video Station sends the required program to the distribution server that, for example, delivers the program via a cable to a PC with a TV card.

The invention also relates generally to a method and system to broadcast a TV channel or Video channel on a TV through a main authorization server connected with the Internet to select the required subject or program through the Internet, to end through a TV cable or digital cable linked with a TV monitor. The system and method involve recalling the required program from a user command made using a PC, the transmission ending through a cable to a TV monitor or PC at the user's location. The end result of the new system is an excellent sound and picture with no need to download or reload. The user starts by opening the PC and browses the web site, then clicks on the indication of a video to be selected, from a list. The authorization server connected with the Internet receives the command and sends it to the processing server, which transfers it to the main video server of the TV or Video Station, which includes live broadcasts, recorded videos and video-on-demand that can be recalled through the IP address. Then the video server sends the required program to the distribution server, which delivers the selected video through the cable to a TV monitor.

The invention further relates generally to a method and system to broadcast a TV channel or Video channel on a TV monitor through satellite through an authorization server connected with the Internet to receive the required subject or program through the Internet to end through a receiver and / or decoder linked with a TV. The method and system recall the required program starting from the user's PC and end by displaying the selected video on the user's TV monitor, through Satellites, with an excellent final sound and picture with no need to download or reload. When the user opens the computer, and browses the web site, he chooses the required video by clicking on it. The authorization server connected with the Internet receives the user command and sends it to the processing server, which sends it to the main video server of the TV or Video Station which includes live broadcasts, recorded videos and video-on-demand, through the IP address. Then the video server sends the selected video to the distribution server, which sends it to the broadcasting apparatus which sends it to the satellite, for the signal to be received by a receiver or decoder having a chip, ending at a TV monitor.

The invention also concerns in general a method and system to broadcast a TV channel or Video channel on TV through satellite through an authorization server connected with the Internet to receive the required subject or program, selected through the Internet, to end through a receiver linked with a PC having a TV card. The system and method recall the program from the user's PC and display the selected video on the user's PC with a TV card, through a satellite transmission, the displayed program having an excellent sound and picture with no need to download or reload. The user opens his computer and browses the web site, then clicks on the required video. The authorization server connected with the Internet receives the required video, and sends it to a processing server which transfers it to the main video server on the TV or Video Station that contains live broadcasts, recorded video and video-on-demand. This can be recalled through an IP address then the video server sends the required video to the distribution server, which sends the required video to the broadcasting apparatus, which accordingly sends the required video to the satellite, which resends the program into the receiver or decoder with a chip, to end at a PC with a TV card.

In the discussed methods and systems for broadcasting a video or a TV channel on TV or PC having TV card through an authorization server connected with the Internet, the system preferably has:
a- A personal Computer.
b- A main authorization server connected with Internet to receive the commands through the Internet.
c- A processing system, connected with main authorization server to operate the main video server.
d- A main video server on the TV or Video Station, having live video, recorded video and video-on-demand. These programs can be broadcast when an order is received from the processing server.
e- A broadcasting apparatus (distribution server) that receives the selected programs from the main video server and broadcasts them through TV cables or digital cables as required by the user commands through Internet.
f- A device to send the broadcast via Satellite.

In all of these different aspects, the main authorization server on the web site connected with the IP address is the host site of the network system, that is the site where the subscribers enter to find the videos and to request the entry to the site of the video order with the cable code or chip code or password of the decoder and / or receiver.

The method and system according to the invention are also distinguished by the sources of video that are stored in the main video server (live video, recorded video, video-on-demand) and that are accessible for broadcast through the above-mentioned resources.

As mentioned above, the system according to the invention is arranged so that the user command can be coordinated with the availability of the channels to initiate distribution immediately or at a specified future time. The system provides an indication of the available channel(s) that is sent back to the main authorization server, typically with a request for the user to confirm the order. When the user confirms, the distribution server processes distribution of the selected video on the given channel at the ordered time. When confirming the order the user is apprised of the channel used for the distribution, and can tune his TV monitor to the indicated channel to receive the transmitted video at the planned time.

In case all channels are occupied, the main authorization server can inform the user and possibly propose a later (or earlier) time when a channel will be available. In this case, the user can either cancel the order or place an order to initiate the distribution at the selected alternative time.

For the most part, selection of the available channel(s) can be automated in the distribution server, or partly automated so the user can participate in the channel selection. For example, the main authorization server may provide an indication of several available channels, and the distribution will begin when the user selects a channel.

In another variation, the user can specify in his initial order one selected channel, or several selected channels, for the broadcast. In this case, the distribution server will determine if a selected channel is available to initiate the distribution at the required time. If not, the order can be cancelled, or an alternative time on the same channel, or alternative channels for the same distribution time, can be proposed.

In another variation, the user can specify several suitable times for the distribution or can specify a range of times (for example "between such-and-such time on such-and-such dates", or "within the next hour" or by another specified time). Various alternatives to simplify ordering by the user can be worked out by the service provider and included in an interactive ordering list.

In particular for live broadcasts, the user can specify a specific time ahead for the transmission of an event, but can also join in a live broadcast after it has begun. In such case, it is possible to offer the user a recorded version of the missed first part of the event.

From the above, it can be seen that the system and method of the present invention allow great flexibility and convenience for the user in ordering different types of video contents immediately or at a later time. Moreover, processing of the orders is problem-free for the service providers who can make use of existing equipment to implement the invention.

### Brief Description of the drawings

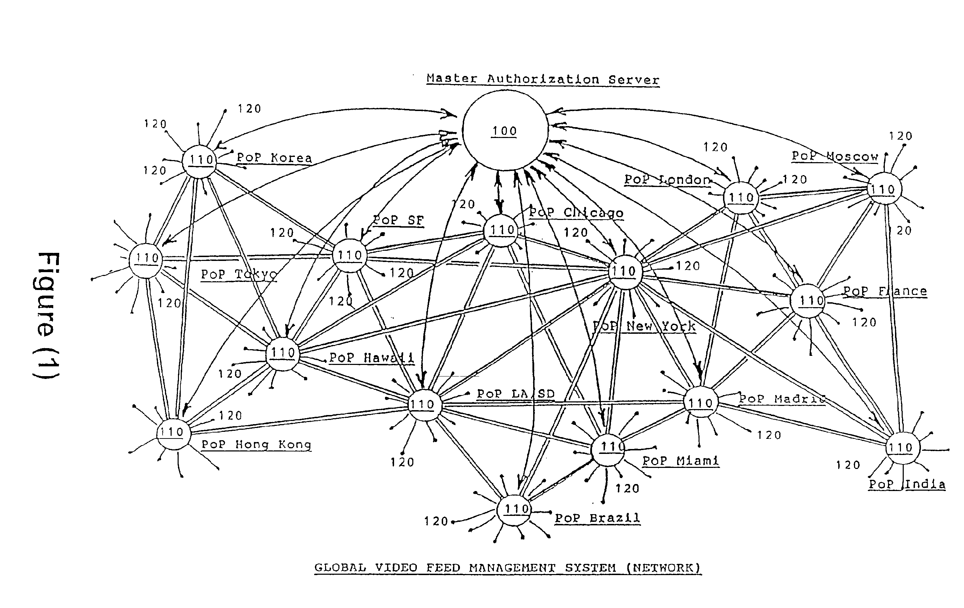

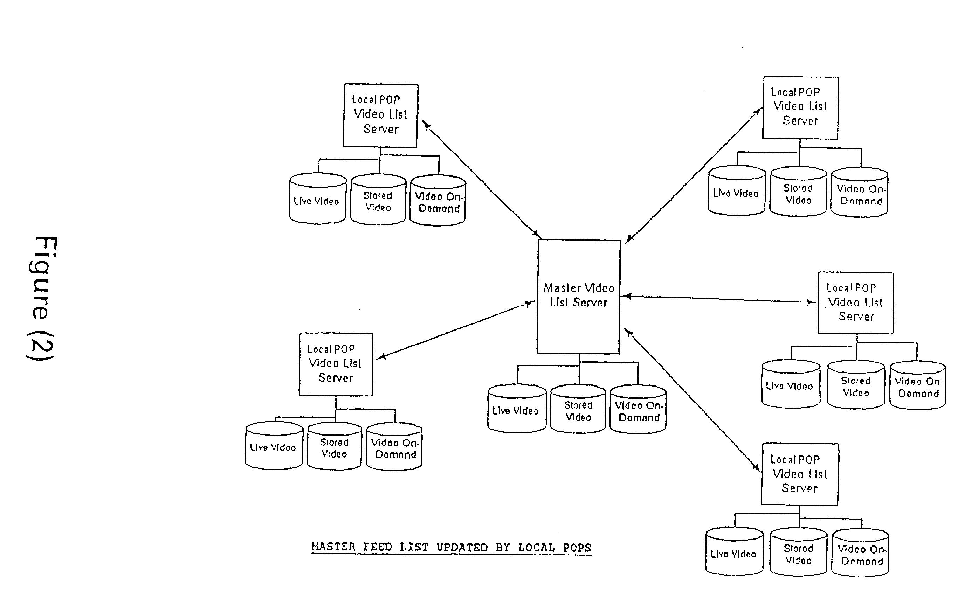

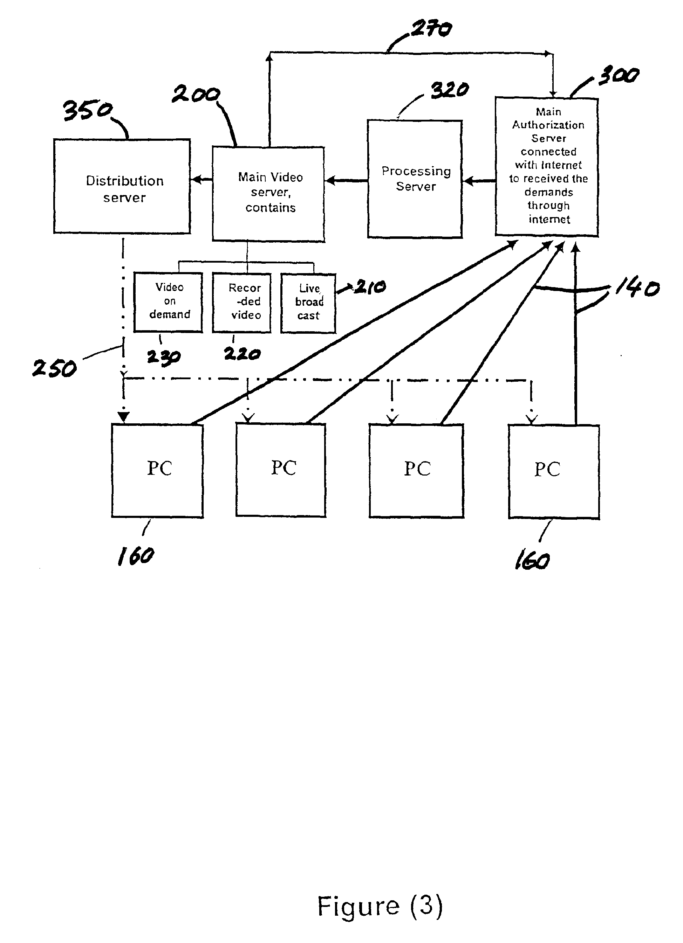

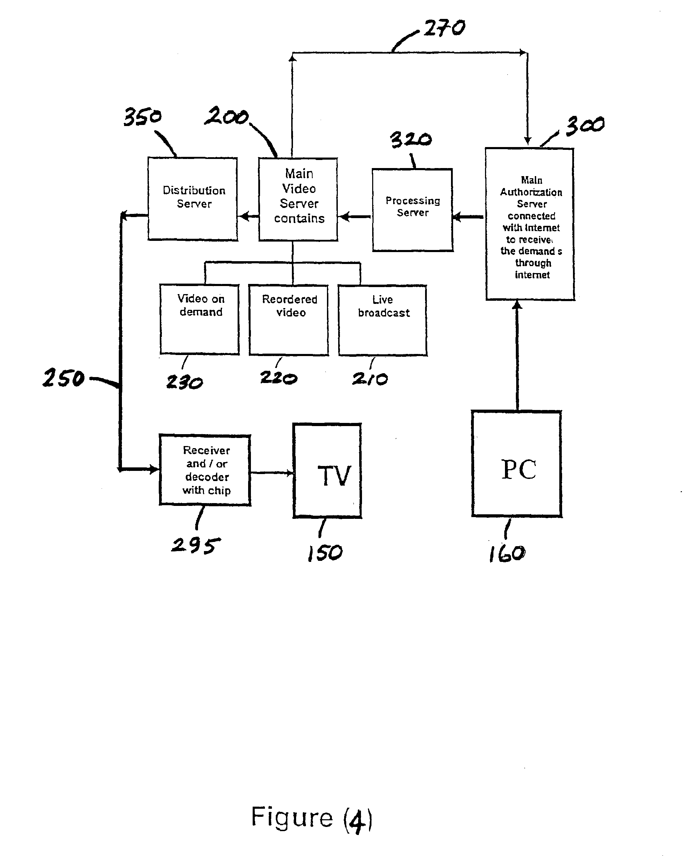

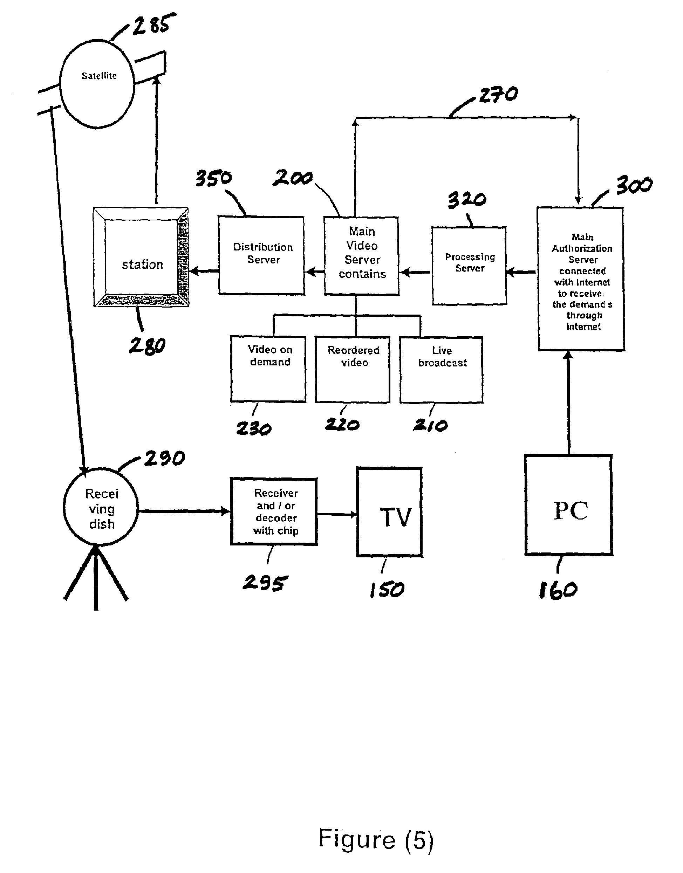

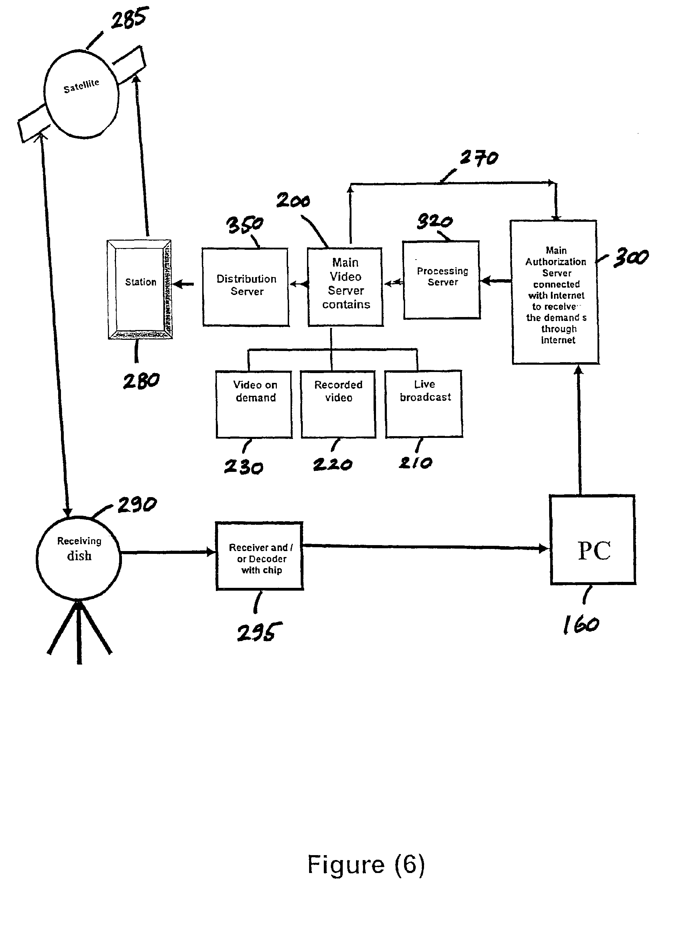

The invention will be further described and compared with a known system with reference to the accompanying drawings wherein Figures 1 and 2 illustrate the prior art and Figures 3-6 illustrate by way of example a system according to the invention. In the drawings:
- Figure (1):: Illustrates a diagram of an international network of a video feed management system, as in US patent 6,564,380.
- Figure (2):: Illustrates the feeding of main video from a local video server to a main video device, as in US patent 6,564,380.
- Figure (3):: Illustrates the recalling of a selected program from a PC with a TV card in a system according to the invention, through a main authorization server connected with the Internet, and ending in excellent sound and pictures to be displayed on the PC with a TV card.
- Figure (4):: Illustrates the mechanism of the recalling a selected program using a PC and ending on TV through a cable, in a system according to the invention.
- Figure (5):: Illustrates the mechanism of recalling a selected program using a PC and that ends ending in the program being displayed on a TV monitor, via a satellite transmission.
- Figure (6):: Illustrates the mechanism of recalling a selected program using a PC and that ends in the program being displayed on the PC with a TV card, via a satellite transmission.

### Detailed Description

Figure (1) is a diagram of a global video feed management system as in US Patent 6,564,380. This system includes a master authorization server 100 with Points- of-Presentation (POPs) 110 connected to video feed sources 120 as illustrated.

Figure (2) illustrates the Master Feed List Updated by local POPs 110 as in US Patent 6,564,380 through local POP video list servers which provide live video, stored video and video-on-demand, through the master video list server as there is a continuous connection between the local servers and the main servers.

In the arrangement of US Patent 6,564,380 the broadcasting of the video is done via the Internet. Therefore this system suffers from the above-mentioned disadvantages, in particular unclear audio and video, and the need to reload.

Figures (3) to (6) illustrate a system according to the invention. Fig. (3) illustrates the recalling of a required program where the user's PC 160 is provided with a TV card, through main authorization server 300 connected with the Internet 140, whereby the new system results in an excellent sound and picture of the required display on the user's PC 160 with a TV card. When the user opens the computer 160 with a TV card, he browses the web site on the Internet, and chooses the required program by clicking on the required option on a list of options displayed on the PC screen. The authorization server 300 connected with the Internet receives the order for the required program and sends it to a processing server 320, which transfers it to a main video server 200 of a TV or Video Station. The main video server 200 stores all the video contents available for to the user and that can be listed (all together or in part) on a selection list that can be arranged by category etc, and which includes live broadcast 210, recorded video 220 and video-on-demand 230. The list(s) of the video contents of main video server 200 are delivered, via a line 270, to the main authorization server 300 so they can be recalled through the latter's IP address. The main video server 200 sends selected video contents such as a required program, selected by a user command via the processing server 320, to a distribution server 350 which in this embodiment delivers the program to the PC 160 with a TV card, for example via a cable 250 forming part of a cable distribution system or network.

Figure (4) illustrates another system according to the invention for recalling the required program by orders from the user's PC 160, and ending through cable 250 to a TV monitor 150 at the user's location. When the user opens the PC 160, and browses the web site, the user clicks on the required program from the list of selectable programs in the main authorization server 300. The authorization server 300 which is connected with the Internet 140 receives the required command and sends it to the processing server 320, which transfers it to the main video server 200 which stores live broadcast 210, recorded video 220 and video-on-demand 230 that can selectively be recalled through the IP address of the main authorization server 300. Then the main video server 200 of the TV or Video Station sends the required program to the distribution server 350, which delivers the required program through cable 250 to the TV monitor 150, optionally via a receiver/decoder 195.

Figure (5) illustrates another system according to the invention for recalling a required program by orders from the user's PC 160 and displaying on a TV monitor 150 through a satellite system comprising a transmission station 280, a communications satellite 285 and, at each user's location, a receiving dish 290 and a receiver and/or decoder 295 having a chip (frequently embodied in a so-called Set Top Box) and a TV monitor 150. When the user opens the computer 160, and upon browsing the web site, chooses the required program by clicking on the displayed list, the authorization server 300 connects via the internet 140 to receive the required program from the main video server 200, and sends the order to the processing server 320, which sends it to the main video server 200 of the TV or Video Station storing live broadcast 210, recorded video 220 and video-on-demand 230 selectable through the IP address. Then the video server 200 sends the required program to the distribution server 350, which sends the required program to the transmission station 280 which sends it to the satellite 285 whose signal is received by a receiving dish 290 then transferred to the receiver and/or decoder 295 to end on the user's TV monitor 150.

Figure (6) illustrates the possibility of recalling a program by orders from the user's PC 160 and displaying the program on the PC 160 with a TV card, through a satellite system 280, 285, 290. When the user opens the computer 160 and browses the web site, he clicks on the required program, then the authorization server 300 connected with the Internet 140 selects the required program, and sends a command to the processing server 320, connected to the main video server 200 which contains: live broadcast 210, recorded video 220 and video-on-demand 230. The selected program can be recalled through the IP address of the main video server 300. Then the main video server 200 of the TV or Video Station sends the required program to the distribution server 350, which sends the required program to a broadcast station 280, then the broadcast station 280 accordingly sends the required transmission to the satellite 285, which resends the program to be picked up by the user's receiving dish 290, and then to the receiver or decoder 295 with a chip to end at the user's PC 160 with a TV card.

In all of the above-described embodiments, the system is arranged so that when the user sends a command to select a video to the main authorization server 300, this order is processed via the processing server 320 and the main video server 200. The latter determines, with the distribution server 350 and/or with the transmission station 280, which channels are available to broadcast the selected video content immediately or with a delay in correspondence with a user command. The cable 250 and the satellite system 280,285 preferably have many hundreds of channels for digital TV broadcast, some or all of which can be reserved for video-on-demand transmissions. In the usual case where the user requires immediate distribution, the distribution server 350 will determine at least one channel available to immediately initiate the transmission of the selected video. An indication of the available channel is then sent back to the main authorization server 300, typically with a request for the user to confirm the order. When the user confirms, the distribution server 350 processes immediate distribution of the selected video. At the same time the user is apprised of the channel used for the distribution, and can tune his TV monitor 150 (or PC 160 with a TV card) to the indicated channel to receive the transmitted video.

In the case where the user requests distribution of a selected video at a specified future time, the distribution server 350 will determine at least one channel that is available to initiate the transmission of the selected video at the specified time. An indication of the available channel is then sent back to the main authorization server 300, typically with a request for the user to confirm the order. When the user confirms, the distribution server processes distribution of the selected video on the given channel at the ordered time. When confirming the order, the user is apprised of the channel to be used for the distribution, and can tune his TV monitor 150 (or PC 160 with a TV card) to the indicated channel to receive the transmitted video at the planned time.

In case all channels are occupied so the video distribution cannot be initiated immediately, or if the distribution server has already allocated all channels at the future time requested by the user, the main authorization server 300 can inform the user and possibly, based on feedback from the distribution server 350, propose a later (or earlier) time when a channel will be available. In this case, the user can either cancel the order or place an order to initiate the distribution at the selected alternative time.

For the most part, selection of the available channel(s) can be done automatically by the distribution server 350, based on software controlling the allocation of the channels as a function of existing orders and predicted future availability of the channels which fluctuates according to the demand. However, the user can participate in the channel selection. For example, in one variation, the main authorization server 300 provides the user with an indication of several available channels, and the distribution will begin when the user selects one of these channels.

If the user specifies in his initial order one selected channel, or several selected channels, for distribution, the distribution server 350 will determine if a selected channel is available to initiate the distribution at the required time. If not, the order can be cancelled, or an alternative time on the same channel, or alternative channels for the same distribution time, can be proposed.

If the user specifies several suitable times for the distribution or a range of times, the distribution server 350 can search for channel availability according to an order of preference given by the user, or according to predictions of channel occupancy and/or demand, or a combination of these or other parameters.

From the above, it can be seen that the system and method of the present invention, allow great flexibility and convenience for the user in ordering different types of video contents whose distribution is to be initiated immediately or at a later time, whereas processing of the orders is problem-free and the service providers can use existing equipment and easy-to-develop software to implement the invention.

### Further Description of the Invention

The invention aims to get the advantages from the millions of TV and movie films, and Video films and programs whether live, recorded or on demand, the titles of which productions are listed on the Internet, at the main authorization site 300, so they can be chosen. The system according to the invention can be worked and broadcast from any existing satellite stations that broadcast the required programs and video contents upon the user's choice from the web site, these stations sending the broadcast either via satellite 285 or by other TV broadcast, for example by cable 250, to receive the broadcast by a receiver and / or decoder 295, as per one aspect of the current invention.

The invention concerns both a method and system to broadcast a video channel or TV channel with a clear sound and picture from a list available via Internet, but with transmission via a TV or video channel, not via the Internet.

The following description describes a preferred embodiment of a video feed management system that includes live video, recorded video, video-on-demand through the Internet in a practical way with a new operation system, commencing from the PC. When the user browses the web site, there are many options on the site as : live event, by clicking on the required option, the authorization server 300 connected with the Internet 140 receives the required program and sends it to the processing server 320. The job of the processing server 320 is to open and close the main video server 200 which stores video contents such as: a live event 210, recorded video 220 or video-on-demand 230. The feeding and content of the main video server 200 can be as described in US Patent 6,564,380 or other resources. The main video server 200 is part of the TV or Video Station also with the distribution server 350, which delivers the selected video through TV cables 250 either digital (preferably) or as analogue signals, or via a satellite 285 with receiver and / or decoder 295 having a chip, and which includes the user code defined by the authorization server previously on the net.

However, it is possible to use an extra numbers of servers 200 and 300 depending on the requirement of the system.

Figure (5) illustrates the possibility of receiving a Video broadcast or a TV channel through a satellite 285, and through an authorization server 300 connected with the Internet 140 to select the required program, i.e. by the user choosing the desired program through the main authorization server 300 on the web. Upon choice of the required program, the authorization server 300 sends an order to the processing server 320 which sends it to the main video server 200 of the TV or Video Station, then to the distribution server 350, which sends, through the ground broadcast station 280, the required program to the satellite 285. The satellite 285 then resends the required matters that are received by the receiver dishes 290 and end with a receiver and / or decoder 295 having chip that stores the user's code, to be connected with a TV monitor 150 or a PC 160 having a TV card. There must be an available channel amongst the multitude of channels on the satellite networks for such broadcast, and each user can be known by the user's code on the chip, and found on the receiver / decoder 295.

When the user opens the web site of the main authorization server 300, there are various options such as live events, recorded video, video-on-demand, etc., depending on the manner of production and transfer of the video content. The latter can be digital video, TV programs, pay-per-view, medical conferences, distance learning, conferences, advertisements, customer services, selling, E-commerce, etc., and are available for delivery by online command to users located anywhere, through the Internet. The use of the system depends on what the public wants online immediately; experience of the system; and the high quality content of video important for the work, using video content which covers local and live events in any place. Any on-site camera or computer camera can convert computer camera format into TV-displaying digital format.

Based on the invention, a PC 160 can be used through a main authorization server 300 and local POP server on the web site connected with the main authorization server's IP address. The main authorization server's main web site is the home site of the system network, and is the site where the subscribers can communicate with the site(s) of the main video server 300. Besides that, the user enter the code of the TV cable, digital cable or chip code on the receiver and / or decoder 295, which is transferred to the processing server 320, then to the main video server 350 of the TV or Video Station, then linked to the TV digital cable 250 to end with the user's TV monitor 150 or PC 160 with a TV card, or the distribution server 350 linked to the broadcast station 280 for broadcast via the satellite 285 then the broadcast can be picked through receiver dish 290 and / or decoder 295, which is linked with a PC 160 having a TV card or with a TV monitor 150. In these ways, it is possible to see the required program, selected through the Internet, on a TV monitor.

In our system, the user can choose the required subject from the main authorization server 300 which is found on the web site via the Internet 140 to be sent through Cable, Digital Cable or Satellite to end with TV monitors 150 or PC's 160 having a TV card to receive TV channels or video. In the prior art systems that have been practically implemented, the watching of these programs took place on the Internet through the video web. But in the system according to the invention it is possible to connect to the Internet using a low-cost 56 or 28 k byte modem or other high-speed connection at the subscriber's choice. However, there is no need to use a high-speed and expensive connection to achieve good quality clear video and audio. Choosing the required program through the main authorization server 300 (which gives the order to the processing server to send the required subject through TV cable, digital cable, and receiver, or by broadcast through a satellite, to display on a TV monitor or a PC having a TV card) can be achieved with a low cost 56 or 28 k byte modem.

As described previously, the system offers many options and a great flexibility for selection of an available channel for the broadcast immediately or at a later time.

### Comparison between the Prior Art and the Invention

The differences between the prior art and the current invention include the following:

### 1- Load and Reload

- In the implemented prior art systems, the programs are downloaded through Internet, and may require reloading several times, and sudden stoppages may happen.
- In the invention the display is achieved without downloading from the Internet, either by display on a TV monitor or on a PC having a TV card. Sudden stoppages are avoided and the need to download and reload is avoided.

### 2- Sound and Picture

- In the implemented prior art systems, the displayed picture on the Internet sometimes becomes unclear, especially when the using a 56k byte modem. As an example, there are problems to maximize the picture.
- In the inventive system, the picture is clear even when a 56 k byte cable is used, and the picture can be maximized on the full screen.

### 3- Using of the Cable

- In the implemented prior art systems, high-speed modems are used to clarify the sound and specially the picture. This is expensive and depends on the speed of the cable. In the prior art, whenever the modem speed is higher, the performance will be better.
- In the invention, if the user so desires, a cable of 56k byte can be used. This is cheap and provides clear sound and pictures. In the system of the invention there is no need to use a high-speed modem to clarify the performance of the sound and picture.

### 4- Sending and receiving the sound and picture

- In the implemented prior art systems, the sending and receiving of the sound and pictures is bi-directional, as the same modem line is used to receive and display on the PC screen through the video web.
- In this invention, receiving of the sound and picture is in one direction. In the inventive system, the programs are displayed on a TV or a PC having PC card.

### 5- The displayed subject

- In the implemented prior art systems, the required video is displayed via the Internet through the video web.
- In the inventive system, the user can choose the TV channels, Video channels and programs using the Internet, for display on a TV monitor or a PC with a TV card. This is a method and system to broadcast a video channel or a TV channel with clear sound and picture.

### 6- Using a special programs to display "flow files"

- In the implemented prior art systems, QuickTime™ or Windows™ media systems were used to display the video "flow files" via the Internet.
- In the present invention, video display programs like QuickTime™ or Windows™ media system are not used for the display.

### 7- Selection of the channels for broadcast

- In US Patent 6.510,556 the user selects a TV channel and a deferred time for distributing the selected video using a distribution schedule.
- In the present invention, an available channel is selected by the system, so the selected video can be distributed immediately, and the user has much greater ease and flexibility for ordering video for immediate or deferred distribution.

## Claims

1. A system for enabling video content to be selected by a user via the Internet (140) and for distributing selected video content via a multichannel video broadcasting system, for the selected video content to be received on a multichannel receiver and displayed at the user's location on a TV monitor (150) or on a PC (160) provided with a TV display card, the system comprising:
- a main video server (200) storing a plurality of selectable video contents (210,220,230);
- an authorization server (300) accessible via the Internet for a user to transmit user commands to select video contents that are to be displayed immediately or with a delay;
- a multichannel video broadcasting apparatus (250;280,285); and
- a distribution server (350) for supplying, from the main video server (200) to the broadcasting apparatus (250;280,285), selected video contents to be broadcast on channels of the broadcasting apparatus;
- the system being arranged to provide an indication of a channel that is available to broadcast a selected video content immediately or with a delay in correspondence with a user command, said indication being available to the user via the authorization server (300) and the Internet (140); and
- the system being arranged to initiate the broadcast of a selected video content on the indicated available channel immediately or with a delay in correspondence with said user command.

2. The system of claim 1, wherein the main video server (200) stores live broadcasts (210), recorded videos (220) and video-on-demand (230).

3. The system of claim 1 or 2, wherein the multichannel video broadcasting apparatus (250;280,285) is a digital broadcasting apparatus having a broad bandwidth with several hundreds of channels.

4. The system of claim 1, 2 or 3, wherein the multichannel video broadcasting apparatus comprises a cable TV network (250).

5. The system of claim 1, 2 or 3, wherein the multichannel video broadcasting apparatus comprises a ground transmission station (280) arranged to transmit to a communications satellite (285).

6. The system of any preceding claim, wherein the distribution server (350) is arranged to provide automated selection of a channel available to broadcast immediately or with a delay in correspondence with a user command, or a partly automated selection assisted by a user command.

7. The system of any preceding claim, comprising a processing system (320), connected with the main authorization server (300) to operate the main video server (200).

8. A method for enabling a user to select a video content via the Internet (140) and for distributing selected video content via a multichannel video broadcasting system for the selected video content to be received on a multichannel receiver and displayed at the user's location on a TV monitor (150) or on a PC (160) provided with a TV display card, the method comprising:
- selecting, from a plurality of selectable video contents (210,220,230) that are stored on a main video server (200), video contents that are to be displayed immediately or with a delay, in response to user commands transmitted via the Internet (140);
- supplying selected video contents from the main video server (200) to a multichannel video broadcasting apparatus (250;280,285), for the selected video content to be broadcast on an available channel of the broadcasting apparatus;
- providing an indication of a channel that is available to broadcast a selected video content immediately or with a delay in correspondence with a user command, said indication being available to the user via the Internet (140); and
- initiating the broadcast of a selected video content on the indicated channel immediately or with a delay in correspondence with said user command.

9. The method of claim 8, wherein the video contents are selected from live broadcasts (210), recorded videos (220) and video-on-demand (230).

10. The method of claim 8 or 9, wherein the selected video contents are broadcast on a channel selected from a broad bandwidth with several hundreds of channels.

11. The method of claim 8, 9 or 10, wherein the selected video contents are broadcast on a channel of a cable TV network (250).

12. The method of claim 8, 9 or 10, wherein the selected video contents are broadcast via a ground transmission station (280) that transmits to a communications satellite (285).

13. The method of any one of claims 8 to 12, wherein the selection of a channel available to broadcast immediately or with a delay in correspondence with a user command is automated, or is partly automated and assisted by a user command.
